# EUROPÄISCHE PATENTSCHRIFT

(11) **EP 1 498 911 B1**
(45) Veröffentlichungstag und Bekanntmachung des Hinweises auf die Patenterteilung: **29.10.2008**
(21) Anmeldenummer: 04011614.7
(22) Anmeldetag: 15.05.2004
(51) Int. Cl.: H01F 7/02, G01P 3/487, F16D 1/06

(54) **Ringmagnet**
Annular magnet
Aimant annulaire

(30) Priorität: 15.07.2003 DE 10331961
(43) Veröffentlichungstag der Anmeldung: 19.01.2005
(73) Patentinhaber: ROBERT BOSCH GMBH, 70442 Stuttgart (DE)
(72) Erfinder: Meyer, Christian, 76228 Karlsruhe-Wolfartsweier (DE)

(56) Entgegenhaltungen:
- DE-C- 19 536 057
- DE-U- 8 614 601
- US-B1- 6 198 185
- US-B1- 6 452 383

## Beschreibung

### Stand der Technik

Die Erfindung betrifft einen Ringmagneten zur Befestigung auf einer Welle sowie eine Getriebeantriebseinheit beinhaltend einen solchen Ringmagneten nach der Gattung des Anspruchs 1, sowie ein Verfahren zum Befestigen eines Ringmagneten auf einer Welle nach der Gattung des Anspruches 11. Mit der WO 01/36856 A2 ist eine Vorrichtung zum Verbinden einer Welle mit einem Ringmagneten bekannt geworden, bei der zuerst die Oberfläche der Welle deformiert wird, und anschließend der Magnetring mit seiner Innenfläche kraftschlüssig über die Deformationsbereiche gepresst wird. Nachteilig bei einer solchen Vorrichtung ist, dass für die Deformation der Außenfläche der Welle ein separater Arbeitsgang notwendig ist Außerdem ist das Anformen von Deformationsbereichen mit großen Toleranzbändern verbunden, so dass zum Anpressen des Magnetrings unter Umständen sehr hohe Kräfte notwendig sind. Beim Einsatz einer solchen Vorrichtung über einen weiten Betriebstemperaturbereich besteht die Gefahr, dass sich durch die unterschiedliche Wärmeausdehnung der Welle und des Magnetrings die Verbindung löst.

Mit der DE-U-8614601 ist ein Rotormagnet bekannt geworden, der mittels Klemmhaken auf einer Drehachse befestigt wird. Dabei sind mehrere einzelne Klemmhaken über den Umfang verteilt in Hinterschnitte des Magneten eingefügt und liegen mit einem gabelförmigen Abschnitt an der Welle an. Mit der US-B-6198185 und US-B-6452383 sind Ringmagnete bekannt geworden, die mittels eines metallenen Halteelements auf einer Welle befestigt sind. Bei der Herstellung des Ringmagneten wird dabei das metallene Halteelement als Einlegeteil mit dem magnetisierbaren Kunststoff direkt umspritzt.

Es ist ebenfalls bekannt, einen Ringmagneten auf eine Welle, vorzugsweise mit einem angeformten Rändelbereich, aufzukleben. Bei diesem Verfahren ist es ebenso wie beim oben beschriebenen Aufpressen auf Deformationsbereiche notwendig, dass die Fertigungstoleranzen der Passung zwischen Ringmagnet und Welle gering gehalten werden, was einen entsprechend höheren Fertigungsaufwand bedeutet. Außerdem ist der Klebevorgang prozesstechnisch unerwünscht, da er schwer zu handhaben ist und die Verwendung giftiger Materialen beinhaltet.

### Vorteile der Erfindung

Der erfindungsgemäße Ringmagnet zur Befestigung auf einer Welle mit den kennzeichnenden Merkmalen des Anspruchs 1 hat demgegenüber den Vorteil, dass der Ringmagnet durch das Anformen radialer Fortsätze mittels eines elastischen Klemmelements drehfest auf der Welle befestigt werden kann, ohne dass deren Oberfläche zuvor bearbeitet werden muss. Es sind hierbei nur geringe Fertigungsgenauigkeiten des Ringmagneten und der Welle notwendig, da das elastische Klemmelement sowohl große Fertigungstoleranzen, als auch thermische Ausdehnungen zwischen Welle und Ringmagnet ausgleicht. Dadurch ist eine radiale Zentrierung und ein damit verbundener optimaler Rundlauf des Ringmagneten gewährleistet.

Durch die in den Unteransprüchen angegebenen Maßnahmen sind vorteilhafte Weiterbildungen der Vorrichtung nach dem Anspruch 1 möglich. Weisen die radialen Fortsätze einen axialen Abstand zueinander auf, kann das Klemmelement zwischen den Fortsätzen eingelegt werden, ohne dass das Klemmelement bei der Montage axial verschoben wird. Sind die Fortsätze als Segmente von axialen Wänden ausgebildet, bilden diese über den gesamten Umfang verteilt einen axialen Anschlag für ein Klemmelement, das beispielsweise als Ringfeder ausgebildet ist.

Fertigungstechnisch ist es von Vorteil; wenn sich die Wandsegmente tangential nicht überschneiden, da dann der Ringmagnet günstig mit einem Spritzgussverfahren hergestellt werden kann. Dabei werden beispielsweise drei Segmente der einen Wand mit der einen und drei andere Segmente der zweiten Wand mit einer zweiten Werkzeughälfte entformt. Ein solches Verfahren reduziert die Fertigungskosten eines solchen Kunststoff-Formteils.

In einem bevorzugten Ausführungsbeispiel ist der Ringmagnet als Teil einer Positionserfassungseinrichtung, beispielsweise auf einer Ankerwelle einer Getriebe-Antriebseinheit angeordnet. Bei einer solchen Anwendung wirken auf den Ringmagneten nur geringe Drehmomente, wodurch dieser in einfacher Weise mittels herkömmlicher Feder- oder Klemmelemente dreh- und verschiebefest auf der Welle fixiert werden kann.

Durch die starken radialen Anpresskräfte zwischen dem Ringmagnet und der Welle kann auf eine Oberflächenbearbeitung der Welle an der Verbindungsstelle verzichtet werden, wodurch ein zusätzlicher Bearbeitungsschritt entfällt.

Besonders günstig ist es, einen handelsüblichen Toleranzring oder einen offenen Federring als elastisches Klemmelement zu verwenden. Auf Grund der radialen Vorspannung eines solchen Klemmelements stützt sich dieses mit einer Seite an der Innenfläche des Ringmagneten ab und liegt durch geeignete Wahl des Innendurchmessers des Klemmelements mit seiner Innenseite an der Wellenoberfläche an. Dadurch wird eine feste Verbindung zwischen Ringmagnet und Welle geschaffen, die aber auch zerstörungsfrei demontierbar ist.

Nach dem Verfahren zum Befestigen eines Ringmagneten auf einer Welle nach Anspruch 1, kann bei der Montage des Ringmagneten auf die Welle das Klemmelement in einfacher Weise in den Ringmagneten vormontiert werden, da das Klemmelement radial durch die Vorspannung und axial durch die Fortsätze im Ringmagneten gehalten wird. Dadurch wird der eigentliche Montageschritt stark vereinfacht, da lediglich der vormontierte Ringmagnet auf die Welle aufgeschoben wird. Da der Ringmagnet mittels eines elastischen Klemmelements auf der Welle fixiert ist, werden an die Fertigungsgenauigkeit des Außendurchmessers der Welle sowie des Innendurchmessers der axialen Fortsätze keine hohen Ansprüche gestellt. Die Welle und der Ringmagnet können sowohl mit einem leichten Spiel behaftet sein, oder als leichte Presspassung ausgebildet sein, da das Durchmesserverhältnis für die Fixierung des Ringmagneten unwesentlich ist.

In der Zeichnung sind Ausführungsbeispiele einer erfindungsgemäßen Vorrichtung dargestellt und in der nachfolgenden Beschreibung näher erläutert. Es zeigen
- Figur 1: einen erfindungsgemäßen Ringmagneten,
- Figur 2: einen schematisch auf einer Welle angeordneten Ringmagnetengemäß Figur 1 im Schnitt,
- Figur 3 und Figur 4: zwei verschiedene Ausführungen eines elastischen Klemmelements einer erfindungsgemäßen Vorrichtung und
- Figur 5: einen Halbschnitt eines weiteren erfindungsgemäß fixierten Ringmagneten.

### Beschreibung

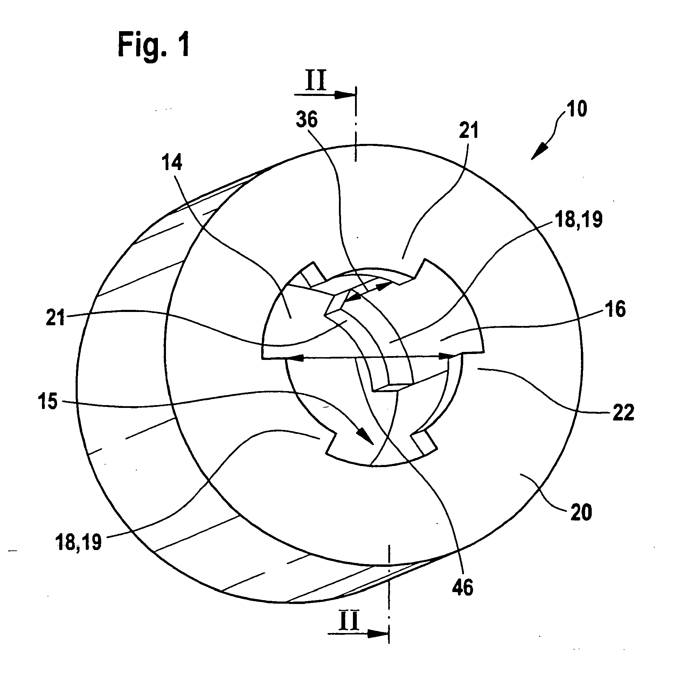

Das in Figur 1 dargestellte erste Ausführungsbeispiel eines erfindungsgemäßen Ringmagneten 10 weist näherungsweise eine zylinderförmige Außenkontur auf, mit einem zentral angeordneten Durchbruch 14 zum Aufschieben des Ringmagneten 10 auf eine Welle 12. Der Durchbruch 14 wird näherungsweise von einer zylindermantelförmigen Innenfläche 16 gebildet, an die radiale Fortsätze 18 angeformt sind, die in den Durchbruch 14 hineinragen. Die Innenfläche 16 bildet zusammen mit den axialen Fortsätzen 18 eine Innenkontur 15, in die ein elastisches Klemmelement 26 eingelegt und dann auf eine Welle 12 aufgeschoben werden kann. Die radialen Fortsätze 18 bilden im Ausführungsbeispiel jeweils drei Segmente 19 zweier axial beabstandeten Wände 21, die mit den axialen Enden 20 des Ringmagneten 10 eine gemeinsame Begrenzungsfläche 22 bilden. Die Segmente 19 der beiden axialen Wände 21 sind jeweils gleichmäßig über den Umfang derart angeordnet, dass diese sich in Umfangsrichtung nicht überlappen. Ein solcher Ringmagnet 10 ist mittels eines Kunststoff-Spritzgussverfahrens hergestellt, bei dem ein Werkzeug mit zwei Platten verwendet werden kann, da bei einer solchen Anordnung ohne Überlapp der Segmente 19 kein Hinterschnitt auftritt. Das gegossene Formteil 10 enthält magnetisierbare Elemente, die mittels eines Prägemagneten gemäß eines vorgegebenen Musters magnetisierbar sind. Dadurch wird beispielsweise ein Multipol-Permanentmagnetring erzeugt, dessen Teilung einen bestimmten Bruchteil einer Umdrehung für eine Positionserfassung charakterisiert. Die eingeprägte Magnetfeldänderung kann beispielsweise mittels Hall-Sensoren oder anderer Magnetfluss-Sensoren, die mit dem Ringmagneten 10 zusammenwirken, gemessen werden. Dadurch kann zuverlässig die Lage eines Rotors oder Getriebeteils eines Drehantriebs - oder eines mittels diesem zu verstellenden Teils - erfasst werden.

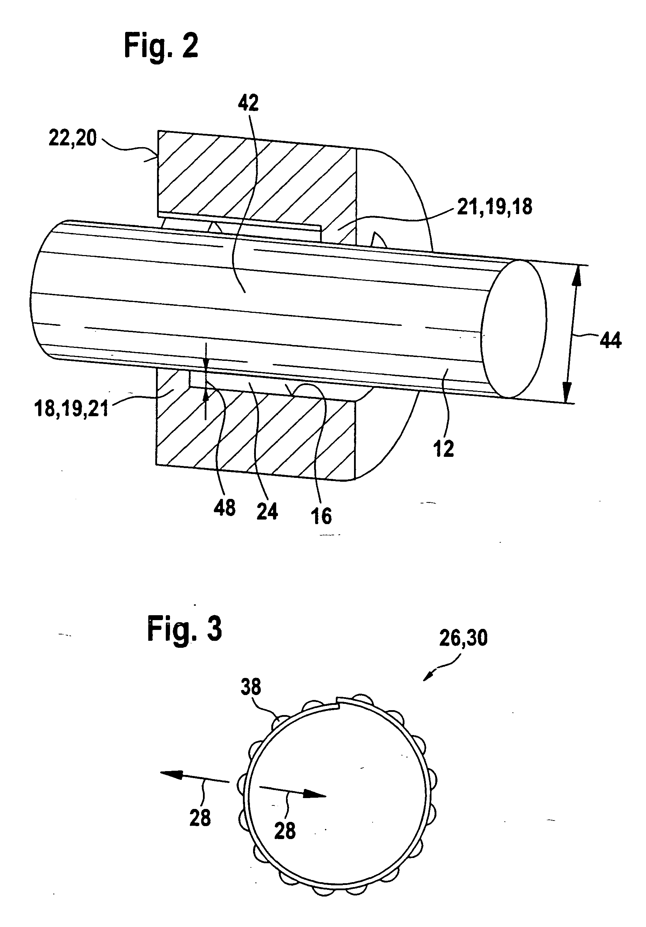

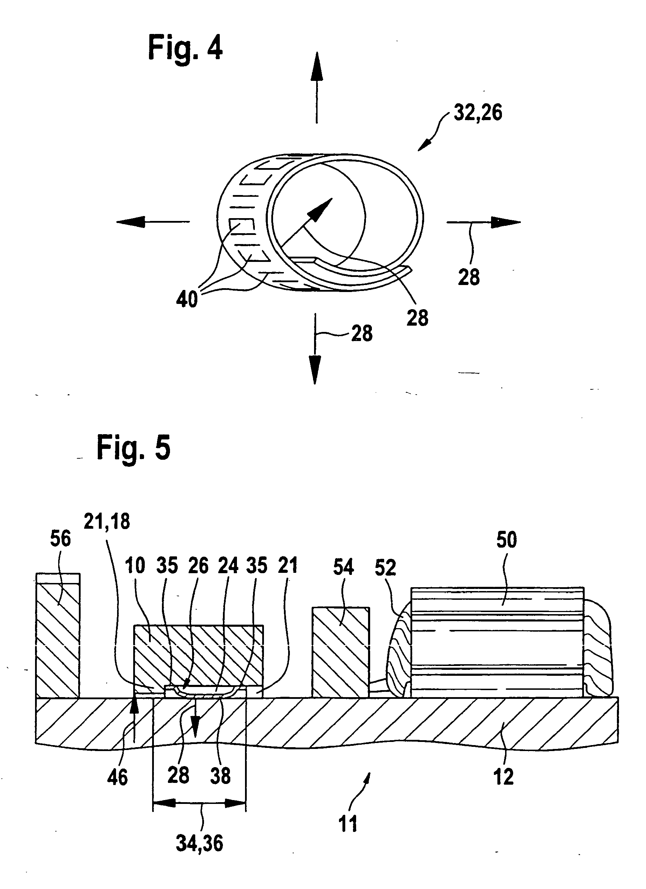

Figur 2 zeigt einen Schnitt durch den Ringmagneten 10 nach Figur 1, wobei dieser schematisch auf einer Welle 12 angeordnet ist. Die radialen Fortsätze 18 liegen hierbei an der Oberfläche 42 der Welle 12 an, wodurch der Ringmagnet 10 bei der Montage vorzentriert wird. Zwischen der Innenfläche 16 des Ringmagneten 10 und der Oberfläche 42 der Welle 12 ist ein zylinderringförmiger Hohlraum 24 zwischen den beiden axial beabstandeten axialen Wände 21 dargestellt. Dieser Hohlraum 24 eignet sich zur Aufnahme eines elastischen Klemmelements 26, das den Ringmagneten 10 mittels radialer Federkräfte 28 auf der Welle 12 fixiert, wie dies in Figur 5 dargestellt ist.

Vor der eigentlichen Montage des Ringmagneten 10 auf die Welle 12 wird daher in den Hohlraum 24 als elastisches Klemmelement 26 beispielsweise ein Toleranzring 30 gemäß Figur 3 oder eine Ringfeder 32 gemäß Figur 4 eingelegt. Das elastische Klemmelement 26 wird aufgrund seiner radial nach außen gerichteten Vorspannung radial durch die Innenfläche 16 gehalten, und axial durch die die axialen Wände 21 bildenden Fortsätze 18 gegen ein axiales Verschieben gesichert. Die axiale Ausdehnung 34 des elastischen Elements 26 entspricht dabei dem Abstand 36 der beiden axialen Wände 21, wodurch der Ringmagnet 10 ohne Axialspiel exakt positioniert werden kann. Die radialen Federkräfte 28 werden zum einen durch die nach außen gerichtete Vorspannung der Ringstruktur der Klemmelemente 26 aufgebracht, zum anderen durch lokal angeordnete, über den Ring verteilte federnde Strukturen 38, die beispielsweise, wie beim Toleranzring in Figur 3, als gewölbte geschlossene Blattfedern ausgebildet sind, deren Federkraft 28 nach außen und/oder nach innen gerichtet ist. Die Ringfeder 32 in Figur 4 weist beispielsweise radial nach außen und/oder nach innen gerichtete federnde Laschen 40 auf, mit denen sich das elastische Klemmelement 26 sowohl gegenüber der Innenfläche 16 des Ringmagneten 10, als auch gegenüber der Oberfläche der Welle 12 abstützt und dadurch den Ringmagneten 10 drehfest fixiert. Die Welle 12 weist hierzu im Bereich des Ringmagneten 10 eine glatte Oberfläche 42 auf, da zur Fixierung des Ringmagneten 10 keine Materialumformung notwendig ist, sondern lediglich elastische Federkräfte 28.

Der Toleranzring 30 und die Ringfeder 32 sind hier beide als offene Ringe ausgebildet, wodurch ein größerer radialer Federweg zur Aufbringung der radialen Anpresskräfte 28 zur Verfügung gestellt wird. Weist das Verhältnis zwischen dem Außendurchmesser 44 der Welle 12 und dem durch die Fortsätze 38 gebildeten Innendurchmesser 46 geringere Toleranzen auf, ist in einer alternativen Ausführungsform auch ein geschlossener Federring einsetzbar, wobei zu dessen Vormontage in den Ringmagneten 10 die radiale Ausdehnung 48 der Fortsätze 18 entsprechend geringer dimensioniert werden muss.

Figur 5 zeigt schematisch einen Schnitt durch einen fertig montierten Ringmagneten 10 auf einer Ankerwelle 12 einer Getriebe-Antriebseinheit 11. Bei der Montage der Ankerwelle 12 wird ein Ständer 50 befestigt und darauf Windungen 52 gewickelt, die mit einem Kollektor 54 verbunden werden. Danach wird der mittels des elastischen Klemmelements 26 vormontierte Ringmagnet 10 auf die Ankerwelle 12 geschoben, wobei das Klemmelement 26 den Ringmagneten 10 radial zentriert und fixiert. Danach wird beispielsweise ein Zahnrad 56 am Ende der Welle 12 befestigt, das das Drehmoment auf ein zu verstellendes Teil, wie beispielsweise ein Schiebedach, eine Fensterscheibe, ein Sitz-Teil oder sonstiges bewegliches Teil im Kraftfahrzeug überträgt. Der Innendurchmesser 46 der Fortsätze 18 weist in diesem Ausführungsbeispiel ein leichtes Spiel auf zum Außendurchmesser 44 der Ankerwelle 12. Aufgrund der radialen Vorspannung 28 stützt sich das elastische Klemmelement 26 hier einerseits mit seinen axialen Enden 35 an der Innenseite 16 des Ringmagneten 10 und mit den radial nach innen gerichteten Blattfedern 38 gegenüber der Ankerwelle 12 ab.

Es sei angemerkt, dass hinsichtlich der in allen Figuren gezeigten Ausführungsbeispiele vielfältige Kombinationsmöglichkeiten der einzelnen Merkmale untereinander möglich sind. Insbesondere ist die konkrete Ausformung der axialen Fortsätze 18, sowie die exakte Form der Innenkontur 15 variabel. Als Klemmelemente 26 können handelsübliche Toleranz- oder Federringe 30, 32, aber auch anwendungsspezifische elastische Elemente 26, beispielsweise aus Metall oder Gummi, verwendet werden. Die Erfindung findet bevorzugt als Positions- oder Drehzahl-Sensor eines Stellantriebs im Kraftfahrzeug Anwendung, ist jedoch nicht auf eine solche Anwendung beschränkt.

## Patentansprüche

1. Ringmagnet (10) mit einem elastischen Klemmelement (26) zur Befestigung auf einer Welle (12) mit einer zylindermantelförmigen Innenkontur (15), wobei der Ringmagnet (10) an seiner Innenkontur (15) radiale Fortsätze (18) zur Aufnahme des elastischen Klemmelements (26) aufweist, mit dem der Ringmagnet (10) auf der Welle (12) fixierbar ist **dadurch gekennzeichnet, dass** das elastische Klemmelement (26) eine Ringstruktur hat und mit einer nach außen gerichteten Vorspannung als separates Element in den Ringmagneten (10) vormontierbar ist.

2. Ringmagnet (10) nach Anspruch 1, **dadurch gekennzeichnet, dass** die Fortsätze (18) axial zueinander beabstandet angeordnet sind, wobei axial zwischen den Fortsätzen (18) das Klemmelement (26) aufnehmbar ist.

3. Ringmagnet (10) nach Anspruch 2 oder 3, **dadurch gekennzeichnet, dass** die axial beabstandeten Fortsätze (18) jeweils als Segmente (19) von zwei axialen Wänden (21) ausgebildet sind, wobei die Segmente (19) in Umfangsrichtung gegeneinander versetzt angeordnet sind.

4. Ringmagnet (10) nach einem der vorhergehenden Ansprüche, **dadurch gekennzeichnet, dass** die Fortsätze (18, 19) derart angeordnet sind, dass sie sich in Umfangsrichtung nicht überlappen.

5. Ringmagnet (10) nach einem der vorhergehenden Ansprüche, **dadurch gekennzeichnet, dass** der Ringmagnet (10) mittels Spritzgussverfahren - insbesondere mit einem zweiteiligen Werkzeug - gefertigt ist.

6. Getriebe-Antriebseinheit (11) mit einer Welle (12), auf der mittels eines elastischen Klemmelements (26) der Ringmagnet (10) nach einem der vorhergehenden Ansprüche angeordnet ist, insbesondere zur Verwendung in einer Positions-Sensoreinheit.

7. Getriebe-Antriebseinheit (11) nach einem der vorhergehenden Ansprüche, **dadurch gekennzeichnet, dass** die Welle (12) im Bereich, in dem der Ringmagnet (10) befestigt ist, eine glatte Oberfläche (42) aufweist.

8. Getriebe-Antriebseinheit (11) nach einem der vorhergehenden Ansprüche, **dadurch gekennzeichnet, dass** das Klemmelement (26) als Toleranzring (30) oder offene Ringfeder (32) ausgebildet ist, die sich einerseits gegen die Innenkontur (15) des Ringmagneten (10) und andererseits gegen die Oberfläche (42) der Welle (12) abstützten.

9. Getriebe-Antriebseinheit (11) nach einem der vorhergehenden Ansprüche, **dadurch gekennzeichnet, dass** das Klemmelement (26) vor und/oder bei der Montage des Ringmagneten (10) auf die Welle (12) durch die Fortsätze (18) zumindest axial gehalten wird.

10. Getriebe-Antriebseinheit (11) nach einem der vorhergehenden Ansprüche, **dadurch gekennzeichnet, dass** die Fortsätze (18) einen Innendurchmesser (46), bilden, der geringfügig größer ist, als der Außendurchmesser (44) der Welle (12).

11. Verfahren zum Befestigen eines Ringmagneten (10) auf einer Welle (12), wobei der Ringmagnet (10) an einer zylindermantelförmigen Innenkontur (15) radiale Fortsätze (18) zur Aufnahme eines separat ausgebildeten elastischen Klemmelements (26) aufweist, mit dem der Ringmagnet (10) auf der Welle (12) fixierbar ist, **dadurch gekennzeichnet, dass** das elastische Klemmelement (26) eine Ringstruktur aufweist, die zuerst in den Ringmagneten (10) unter einer nach außen gerichteten Vorspannung vormontiert wird, und danach der Ringmagnet (10) auf die Ankerwelle (12) aufgeschoben wird, wobei das Klemmelement (26) den Ringmagneten (10) radial zentriert.

12. Verfahren nach Anspruch 11, **dadurch gekennzeichnet, dass** vor der Montage des Ringmagneten (10) mit dem Klemmelement (26) auf der Ankerwelle (12) ein Kollektor (54) und ein Ständer (50) mit darauf angeordneten Windungen (52) befestigt wird.

## Claims

1. Ring magnet (10) having an elastic clamping element (26) in order to be fixed on a shaft (12) and having a cylinder-casing-like inner contour (15), with the ring magnet (10) having on its inner contour (15) radial projections (18) for receiving the elastic clamping element (26) by way of which the ring magnet (10) can be secured on the shaft (12), **characterized in that** the elastic clamping element (26) has a ring topology and can be premounted in the ring magnet (10) as a separate element by way of an outwardly directed prestress.

2. Ring magnet (10) according to Claim 1, **characterized in that** the projections (18) are arranged axially at a distance from one another, it being possible for the clamping element (26) to be received axially between the projections (18).

3. Ring magnet (10) according to Claim 2 or 3, **characterized in that** the axially spaced projections (18) are each formed as segments (19) of two axial walls (21), with the segments (19) being arranged offset in relation to one another in the circumferential direction.

4. Ring magnet (10) according to one of the preceding claims, **characterized in that** the projections (18, 19) are arranged in such a way that they do not overlap in the circumferential direction.

5. Ring magnet (10) according to one of the preceding claims, **characterized in that** the ring magnet (10) is produced by means of injection-moulding processes - in particular with a two-part die.

6. Gear drive unit (11) having a shaft (12) on which the ring magnet (10) according to one of the preceding claims is arranged by means of an elastic clamping element (26), in particular for use in a position sensor unit.

7. Gear drive unit (11) according to one of the preceding claims, **characterized in that** the shaft (12) has a smooth surface (42) in the region in which the ring magnet (10) is fixed.

8. Gear drive unit (11) according to one of the preceding claims, **characterized in that** the clamping element (26) is in the form of a tolerance ring (30) or open annular spring (32) which is supported at one end against the inner contour (15) of the ring magnet (10) and at the other end against the surface (42) of the shaft (12).

9. Gear drive unit (11) according to one of the preceding claims, **characterized in that** the clamping element (26) is at least axially held by the projections (18) before and/or during mounting of the ring magnet (10) onto the shaft (12).

10. Gear drive unit (11) according to one of the preceding claims, **characterized in that** the projections (18) form an inside diameter (46) which is slightly larger than the outside diameter (44) of the shaft (12).

11. Method for fixing a ring magnet (10) on a shaft (12), with the ring magnet (10) having on a cylinder-casing-like inner contour (15) radial projections (18) for receiving a separately formed elastic clamping element (26) by way of which the ring magnet (10) can be secured on the shaft (12), **characterized in that** the elastic clamping element (26) has a ring topology which is initially premounted in the ring magnet (10) under an outwardly directed prestress, and then the ring magnet (10) is pushed onto the armature shaft (12), with the clamping element (26) radially centring the ring magnet (10).

12. Method according to Claim 11, **characterized in that** a collector (54) and a stator (50) with windings (52) arranged on it are fixed before mounting of the ring magnet (10) on the armature shaft (12) by way of the clamping element (26).

## Revendications

1. Aimant annulaire (10) comportant un élément de serrage élastique (26) pour être fixé sur un arbre (12), ayant un contour intérieur (15) en forme d'enveloppe cylindrique,
l'aimant annulaire (10) présentant des prolongements (18) radiaux, sur son contour intérieur (15) pour recevoir l'élément de serrage élastique (26) par lequel l'aimant annulaire (10) se bloque sur l'arbre (12),
**caractérisé en ce que**
l'élément de serrage élastique (26) a une structure annulaire avec une précontrainte dirigée vers l'extérieur et il constitue un élément distinct préassemblé dans l'aimant annulaire (10).

2. Aimant annulaire (10) selon la revendication 1,
**caractérisé en ce que**
les prolongements (18) sont écartés axialement les uns par rapport aux autres et l'élément de serrage (26) se loge axialement entre les prolongements (18).

3. Aimant annulaire (10) selon la revendication 2 ou 3,
**caractérisé en ce que**
les prolongements (18) écartés axialement, sont réalisés chacun sous la forme d'un segment (19) de deux parois axiales (21), les segments (19) étant décalés les uns par rapport aux autres dans la direction périphérique.

4. Aimant annulaire (10) selon les revendications précédentes,
**caractérisé en ce que**
les prolongements (18, 19) sont disposés pour ne pas se chevaucher dans la direction périphérique.

5. Aimant annulaire (10) selon les revendications précédentes,
**caractérisé en ce que**
l'aimant annulaire (10) est fabriqué par un procédé d'injection notamment à l'aide d'un outil en deux parties.

6. Unité d'entraînement de transmission (11) comportant un arbre (12) portant un aimant annulaire (10) selon les revendications précédentes, par l'intermédiaire d'un élément de serrage élastique (26), notamment destiné à une unité de capteur de position.

7. Unité d'entraînement de transmission (11) selon les revendications précédentes,
**caractérisée en ce que**
l'arbre (12) a une surface lisse (42) dans la zone dans laquelle est fixé l'aimant annulaire (10).

8. Unité d'entraînement de transmission (11) selon les revendications précédentes,
**caractérisée en ce que**
l'élément de serrage (26) est réalisé sous la forme d'une bague de tolérance (30) ou d'un ressort annulaire ouvert (32) qui s'appuie d'une part contre le contour intérieur (15) de l'aimant annulaire (10) et d'autre part contre la surface supérieure (42) de l'arbre (12).

9. Unité d'entraînement de transmission (11) selon les revendications précédentes,
**caractérisée en ce que**
l'élément de serrage (26) est tenu au moins axialement sur l'arbre (12) par les prolongements (18) avant et/ou au cours du montage de l'aimant annulaire (10).

10. Unité d'entraînement de transmission (11) selon les revendications précédentes,
**caractérisée en ce que**
les prolongements (18) ont un diamètre intérieur (46) légèrement supérieur au diamètre extérieur (44) de l'arbre (12).

11. Procédé de fixation d'un aimant annulaire (10) sur un arbre (12) selon lequel l'aimant annulaire (10) comporte des prolongements (18) dirigés radialement sur son contour intérieur (15) en forme d'enveloppe cylindrique pour recevoir un élément de serrage élastique (26) réalisé séparément, à l'aide duquel l'aimant annulaire (10) se bloque sur l'arbre (12),
**caractérisé en ce que**
l'élément de serrage élastique (26) a une structure annulaire qui est tout d'abord préassemblée dans l'aimant annulaire (la) avec une précontrainte dirigée vers l'extérieur puis, l'aimant annulaire (la) est emmanché sur l'arbre d'induit (12) et l'élément de serrage (26) assure le centrage radial de l'aimant annulaire (10).

12. Procédé selon la revendication 11,
**caractérisé en ce qu'**
on fixe un collecteur (54) et un stator (50) avec les enroulements (52) sur l'arbre d'induit (12) avant le montage de l'aimant annulaire (la) par l'élément de serrage (26).
